# EUROPEAN PATENT APPLICATION

(11) **EP 3 210 906 A1**
(43) Date of publication of application: **30.08.2017**
(21) Application number: 16157060.1
(22) Date of filing: 24.02.2016
(51) Int. Cl.: B65D 63/10

(54) **CABLE TIE**

(71) Applicant: Tyco Electronics UK Limited, Swindon, Wiltshire SN3 5HH (GB)
(72) Inventor: MACNAUGHTON, Roy, Swindon, Wiltshire SN1 4LT (GB); EYLES, Jonathan Mark, Swindon, Wiltshire SN3 5BW (GB); HAMMOND, Philip, Wootton Bassett, Wiltshire SN4 8BJ (GB)
(74) Representative: Grünecker Patent- und Rechtsanwälte PartG mbB

(57) **Abstract**

In order to provide a cable tie that uses less space than the known cable ties, the application provides a cable tie (1) comprising a belt (2), a head (3) that is connected to the belt (2) and that has a through-opening (4) for receiving the belt (2), and a blocking member (5) that is disposed in the head (3) displaceable in a plane (44) of the through-opening (4) along a stroke (6) and that has at least one engagement member (7) configured to lock the belt (2).

## Description

The invention relates to a cable tie.

Cable ties are used for fixing cables to structures or for attaching several cables to each other. The known cable ties are spacious and their heads can cause damage to adjacent substrates or can snag on adjacent structures.

The object of the invention is to provide a cable tie that uses little space, has a low profile head and thus the potential for damage to adjacent substrates and the risk of snagging on adjacent structures is reduced.

This object is achieved by a cable tie comprising a belt, a head that is connected to the belt and that has a through-opening for receiving the belt, and a blocking member that is disposed in the head displaceable in a plane of the through-opening along a stroke and that has at least one engagement member configured to lock the belt.

Due to the displaceability in the plane of the through-opening along the stroke, such a cable tie is less spacious than conventional cable ties with a rotational movement.

The inventive solution can be combined as desired with the following further improvements and advantageous developments.

In order to allow a simple production and in order to save space, the blocking member can be translationally displaceable. In particular, it can be purely translationally displaceable. It can be held or received displaceable, in particular translationally displaceable in the head.

In an advantageous embodiment, the stroke can be parallel to a belt direction or a belt insertion direction of the through-opening to allow simple locking and a compact design.

In another advantageous embodiment, the stroke can be inclined or perpendicular to the belt direction or the belt insertion direction of the through-opening.

In an embodiment that is simple to manufacture and to operate, the locking by the engagement member can be due to friction between the engagement member and the belt.

If the locking between the engagement member and the belt is due to a positive fit, higher forces can be achieved for the locking. The engagement member can comprise or be configured as positive fit elements, in particular teeth. Similar positive fit elements, in particular teeth can be located on the belt. The positive fit elements can protrude perpendicular to a belt direction away from the belt. For a simple operation with little backlash, the positive fit elements can comprise stop faces running basically perpendicular to the belt direction.

Preferably, a thickness of the head is less than three times a thickness of the belt to allow a flat construction.

The head and/or the blocking member can comprise latches for latching the blocking member to the head. Thus, in particular, an unintentional separation of the two can be avoided. The latching can, in particular, be perpendicular to a belt direction or to a tightening direction. The latches can for example comprise elastically deflectable latching arms or latching protrusions.

The blocking member and the head can be separate elements. In this case, the blocking member and the head can be made from different materials. For example, the blocking member can be made from a harder or tougher material to allow higher forces to be used. The head can be made from a less tough or softer material and thus be produced at lower costs. The use of different materials can also be advantageous when it comes to ease of production. For example, the head can be made from a plastic material in the moulding operation and the blocking member can be made from metal in a more complicated production operation.

The blocking member and/or the head can be integral with each other. They can, for example, be a single plastic element that has been made by moulding. The two can, for instance, be connected by a material bridge which can for example be a thin thread like element. These features allow production of the entire cable tie as a single piece in a single operation.

The cable tie can comprise a hinge structure with a weakened region. Through this, a flexing or bending can be facilitated. The weakened region can have a higher flexibility than neighbouring regions. The hinge structure can be embodied as an integral hinge.

The weakened region can comprise a channel running perpendicular to a tightening direction, a belt insertion direction of the through-opening or a belt direction defined by the belt. The flexibility around, for example, a circumference of a plurality of cables is thus increased and the cable tie can be wrapped around the plurality of cables more closely.

A tightening direction along which the belt is tightened can be parallel or identical to a belt insertion direction of the through-opening and to a belt direction defined by the belt. A direction of a locking motion can be anti-parallel to the belt insertion direction, the tightening direction and/or the belt direction.

The head can comprise a top opening, wherein the blocking member is accessible at least from a top side. This makes a compact construction possible, in particular in a thickness direction. It is not necessary to have an extra element that closes the top opening and that needs extra space in the thickness direction. Such a top opening can also be used for inserting the blocking member perpendicular to the thickness direction.

In order to minimize the backlash during a locking motion, the stroke of the blocking member relative to the head can be limited to the pitch of the teeth on the belt or less. To limit the stroke, stop faces can be located on the blocking member and/or on the head.

The head can comprise a base plate on a side opposite the blocking member relative to the belt. The base plate can protect against incorrect assembly, accidental operation or damage and/or support the belt during the locking motion.

In order to achieve higher forces, the blocking member can engage two or more teeth on the belt. Each tooth can then take up a certain force and the force taken up by two or more teeth is higher than when only a single tooth is engaged.

The blocking member and/or the belt can comprise guiding faces running along the tightening direction for guiding the belt.

To achieve a smooth exiting of the belt and thus a flat construction, the head can comprise an inclined output section for the belt. The inclined output section can in particular comprise inclined output faces. The output faces can at least section-wise define channels for the belt. The inclination can be at a small angle to a part of the belt attached to the head so that the part of the belt exiting the head is almost parallel to the part of the belt attached to the head.

The head and/or the blocking member can comprise stop faces for blocking a movement relative to the other when the cable tie is tightened. Such stop faces can in particular be perpendicular to a belt direction or a tightening direction.

The blocking member can comprise a protrusion protruding along a direction of a locking motion, wherein the protrusion is adapted to be pulled below an inner top face of the head and create a positive fit between teeth of the blocking member and the belt. Through this, the blocking member cannot be moved out of the positive fit and a secure operation is provided. The protrusion can for example be pulled into a channel in which the blocking element and the belt are squeezed towards each other.

The head and/or the blocking member can comprise counter stops to prevent a dismantling when untightening or loosening the cable tie. These counter stops can again be perpendicular to a belt direction or a tightening direction.

The head and/or the blocking member can comprise guides for guiding the blocking member relative to the head along the tightening direction. Such guides can be flat surfaces or rails. The guides can prevent jamming or tilting of the blocking member relative to the head so that the operation of the cable tie is reliable.

In an advantageous embodiment, the blocking member is at least partially located under an inner top face of the through-opening in a first position along the stroke and the blocking member is movable in an upward direction beyond the inner top face in a second position. The inner top face can thus push the blocking member onto the belt to achieve a locking in the first position. In the second position, the blocking member can be movable relative to the belt so that the belt is no longer locked and can be tightened along the tightening direction. Once the cable tie is tightened, it can be transferred to the first position in which the blocking member locks the belt.

The relative movement between the belt and the blocking member can, however, only be possible when a force is applied moving the blocking member in a direction perpendicular to the belt direction away from the belt for example by ramps that convert a tightening force into a force that moves the locking member in a direction perpendicular to the belt direction away from the belt. In a neutral or force free position, the blocking member and the belt can overlap in this direction perpendicular to the belt direction. In particular, teeth of the two can engage each other in a neutral position so that the blocking member is automatically pulled into the first position when the tightening force is taken away. There can thus be a bit of interference between the blocking member and the belt in the direction perpendicular to the belt direction.

The inventive solution will now be described in an exemplary manner with reference to the figures. The advantageous embodiments and further developments described herein are advantageous on their own and can be combined as desired.

In the figures:
- Fig. 1: shows a bottom view of a first embodiment of a cable tie;
- Fig. 2: shows a top view of the first embodiment of a cable tie;
- Fig. 3: shows a front view of the first embodiment of a cable tie;
- Fig. 4: shows a perspective sectional view of the first embodiment of a cable tie;
- Fig. 5: shows a sectional side view of the first embodiment of a cable tie;
- Fig. 6: shows a sectional perspective view of the first embodiment of a cable tie;
- Fig. 7: shows a sectional side view of the first embodiment of a cable tie;
- Fig. 8: shows a bottom view of a second embodiment of a cable tie;
- Fig. 9: shows a top view of the second embodiment of a cable tie;
- Fig. 10: shows a side view of the second embodiment of a cable tie;
- Fig. 11: shows a sectional perspective view of the second embodiment of a cable tie;
- Fig. 12: shows a sectional side view of the second embodiment of a cable tie;
- Fig. 13: shows a perspective view of the second embodiment of a cable tie;
- Fig. 14: shows a sectional perspective view of the second embodiment of a cable tie;
- Fig. 15: shows a sectional side view of the second embodiment of a cable tie;
- Fig. 16: shows a perspective view of a pre-assembly position of the first embodiment of a cable tie;
- Fig. 17: shows a perspective view of the pre-assembly position of the first embodiment of a cable tie from a different angle;
- Fig. 18: shows a front view of the preassembly position of the first embodiment of a cable tie;
- Fig. 19: shows a sectional front view of the first embodiment of a cable tie;
- Figs. 20 A, B, C: show different views of the preassembly position of the first embodiment of a cable tie;
- Figs. 21 A, B, C: show different views of the first embodiment of a cable tie in an assembled position;
- Fig. 22: shows a cable tie according to the invention compared to a conventional cable tie in a perspective view.

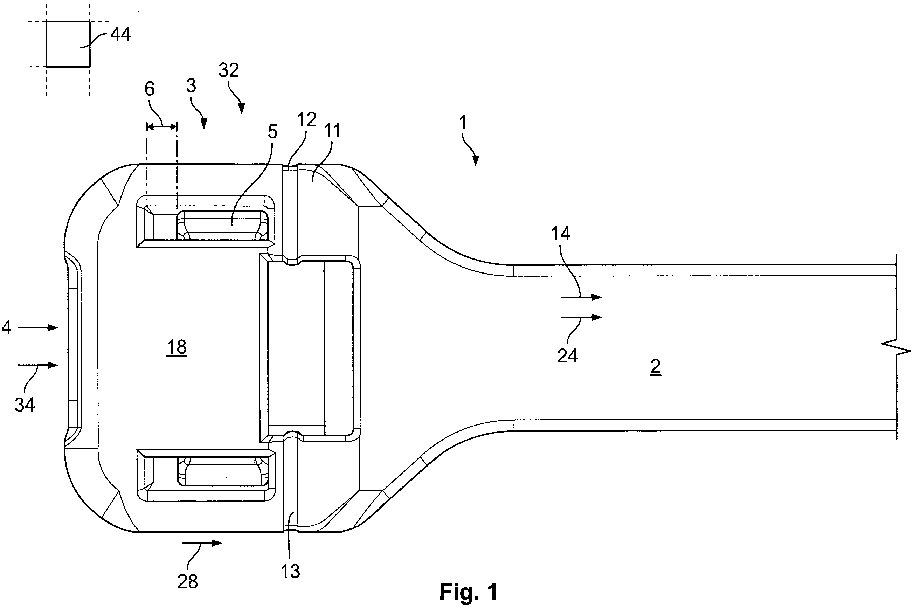

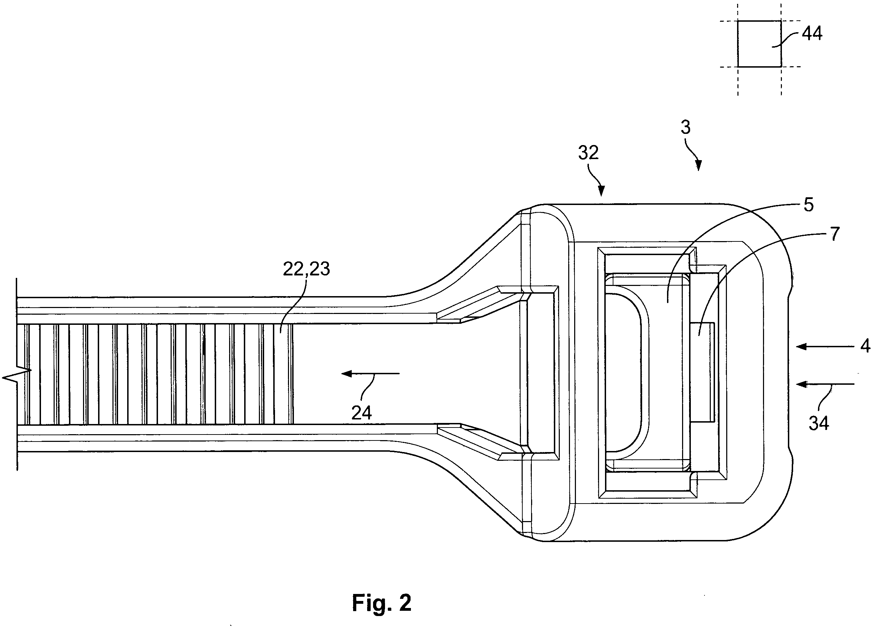

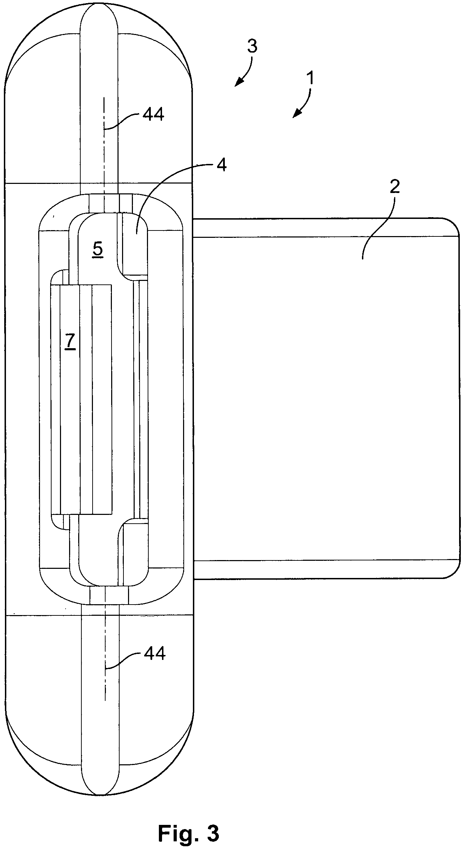

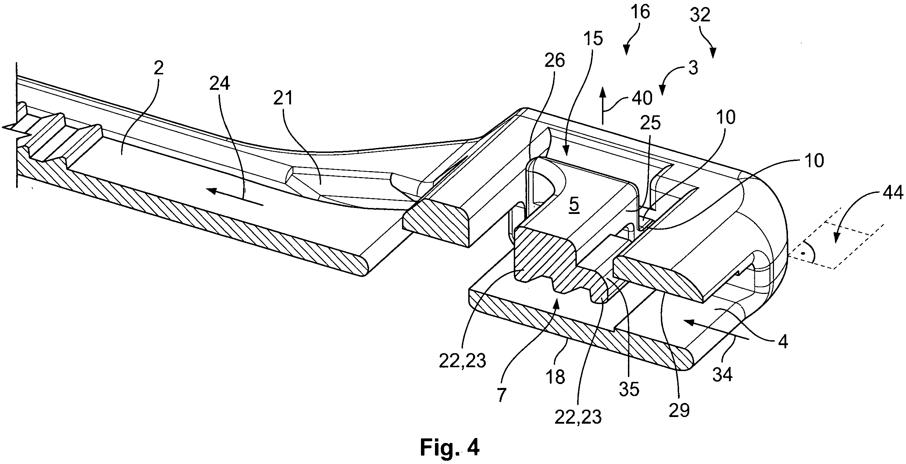

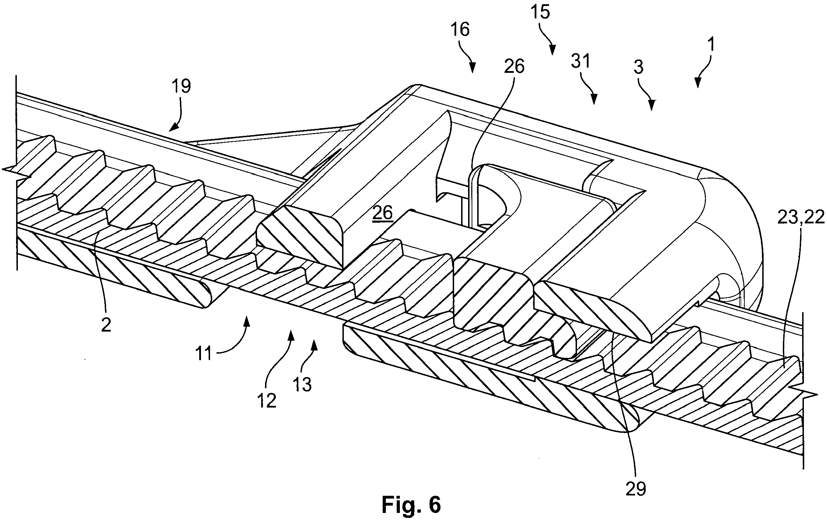

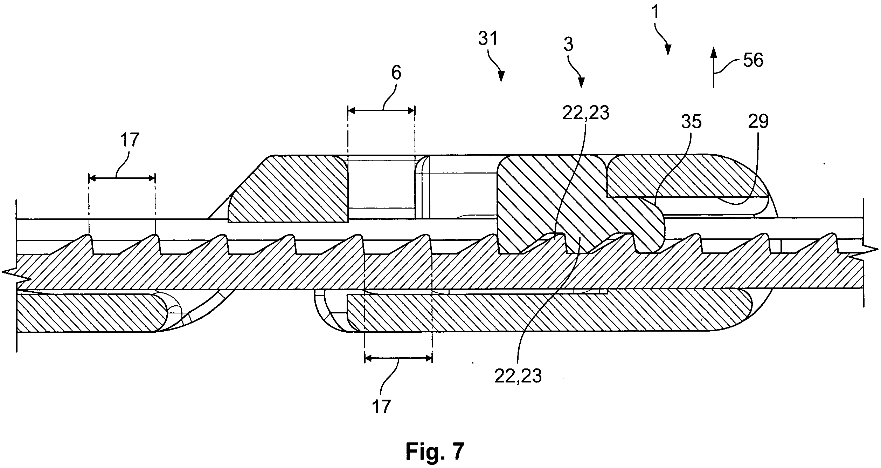

Figures 1 to 7 shows a first embodiment of a cable tie 1 that comprises a belt 2, a head 3 that is connected to the belt 2 and that has a through-opening 4 for receiving the belt 2. A blocking member 5 is disposed in the head 3 displaceable in a plane 44 of the through-opening along a stroke 6 and has several engagement members 7 configured to lock the belt 2. The blocking member 5 is in this embodiment translationally displaceable along a tightening direction 14, a belt direction 24 or a belt insertion direction 34 along which the belt 2 is inserted into the through-opening 4. In another embodiment, the displaceability could be perpendicular to these directions 14, 24, 34 but still in the plane 44 of the through-opening.

In a first position 31, the blocking member 5 is partially located under an inner top face 29 of the head 3. In this position, engagement members 7 of the blocking member 5 that are configured as positive fit elements 22 in particular as teeth 23, cooperate with corresponding positive fit elements 22 configured as teeth 23 on the belt 2 and block a movement of the belt 2 against the tightening direction 14.

In a second position 32, the blocking member 5 is movable beyond the inner top face 29 in an upward direction 40 that runs perpendicular to the tightening direction 14. The belt 2 can then be tightened in the tightening direction 14.

The tightening direction 14 runs parallel to the belt direction 24 and the belt insertion direction 34 along which the belt is inserted into the through-opening 4. The tightening direction 14 runs anti-parallel to a direction 28 of a locking motion by which the belt 2 is locked in the head 3.

When the cable tie 1 is used, the belt 2 is inserted along the belt insertion direction 34 into the through-opening 4 and then tightened by pulling on the free end. Once tightening is no longer possible, the belt 2 pulls back the blocking member 5 which then, due to an inclined face 35, partially slides under the inner top face 29 of the head. By this, the blocking member 5, in particular the protrusion 51 of the blocking member 5, is pulled into the through-opening 4 and a positive fit between the engagement members 7 of the blocking member 5 and the positive fit elements 22 of the belt 2 is automatically achieved. The belt 2 is thus locked relative to the blocking member 5 and the head 3.

The teeth 23 in the first embodiment are designed as ramps with a slightly inclined first face for a smooth guiding and a steep second face for achieving a positive fit.

For blocking the movement of the blocking member 5 relative to the head 3 against the tightening direction 14, stop faces 25 are present on the blocking member 5 and the head 3. The stop faces 25 are perpendicular to the tightening direction 14.

In order to block the movement in the counter direction, counter stop faces 26 are located on the blocking member 5 and the head 3. The counter stop faces 26 are perpendicular to the tightening direction 14.

The cable tie 1 further comprises a hinge structure 11 with a weakened region 12. The weakened region 12 has a higher flexibility than the neighbouring regions and allows a flexing or bending of the cable tie 1. The weakened region 12 is embodied as a channel 13 running perpendicular to the tightening direction 14.

The cable tie 1 further comprises an inclined output section 21 that allows a smooth exiting of the belt 2 from the head 3.

A thickness 8 of the head is less than three times a thickness 9 of the belt 2 so that the entire cable tie 1 is very flat and compact.

The head 3 and the blocking member 5 comprise latches 10 with which the two are connected and latched to each other. An accidental loss is thus avoided.

The blocking member 5 and the head 3 can be made from different materials, for example from materials with a different hardness. The blocking member 5 can, for example, be harder in order to achieve a safe positive fit, while the head 3 is softer and cheaper.

In the embodiment shown, the blocking member 5 and the head 3 are separate elements. However, they can also be integral with each other and for example be connected by a material bridge. Such an embodiment is easy to manufacture and the locking member 5 cannot be lost.

Similarly, the head 3 and the belt 2, which are integral in the examples, can also be separate elements that are only connected to each other.

The stroke 6 is parallel to a belt insertion direction 34 of the through-opening 4 to allow a compact design.

The head 3 comprises a top opening 15 and the blocking member 5 is accessible from a top side 16. This keeps the construction flat as no covering on the top side 16 is necessary. Further, the blocking member 5 can be inserted into the head 3 through the top opening 15.

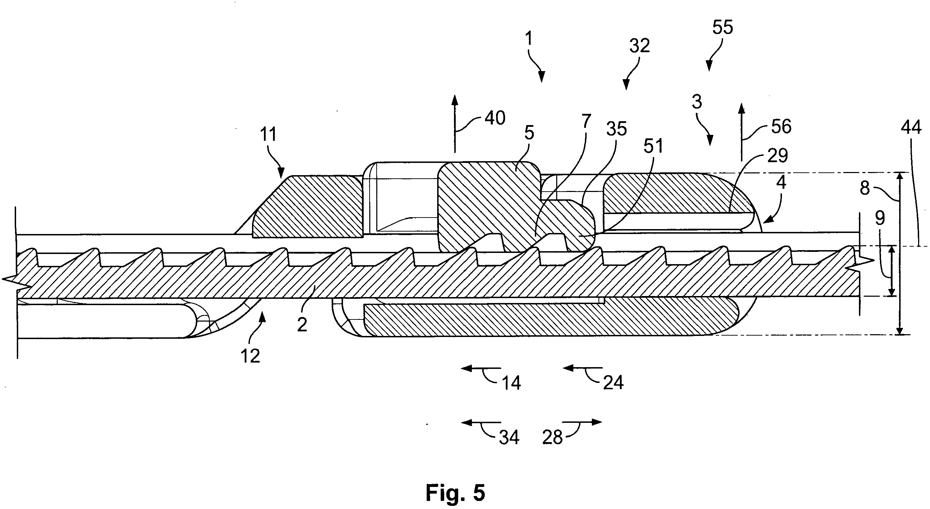

The stroke 6 in the first embodiment is smaller than a pitch 17 between two teeth 23 to minimize the backlash. In a force free position 55 shown for example in Fig. 5, the belt 2 and the blocking member 5 overlap at least partially in a direction 56 perpendicular to the belt direction 24. When the belt 2 is pulled in the tightening direction 14, the teeth 23 of the belt 2 engages teeth 23 of the blocking member 5 by creating a force that is perpendicular to the belt direction 14. When the teeth 23 snap behind each other, the blocking member 5 can automatically be pulled or moved by the belt 2 when the belt 2 moves against the tightening direction 14 and in the direction 28 of the locking motion. A protrusion 51 can then be automatically pulled under an inner top face 29 of the head 3 and create a positive fit between the teeth 23 of the blocking member 5 and the teeth 23 of the head 3.

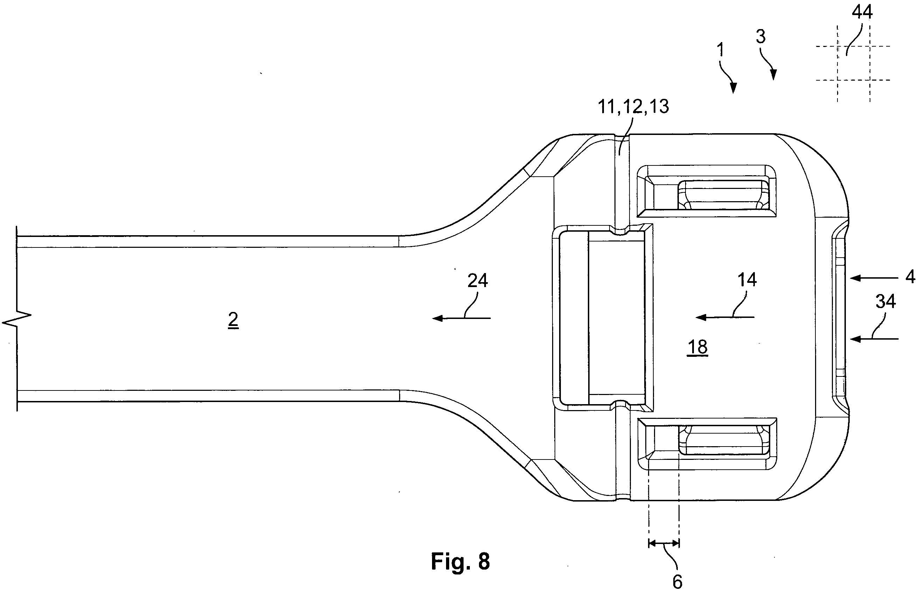

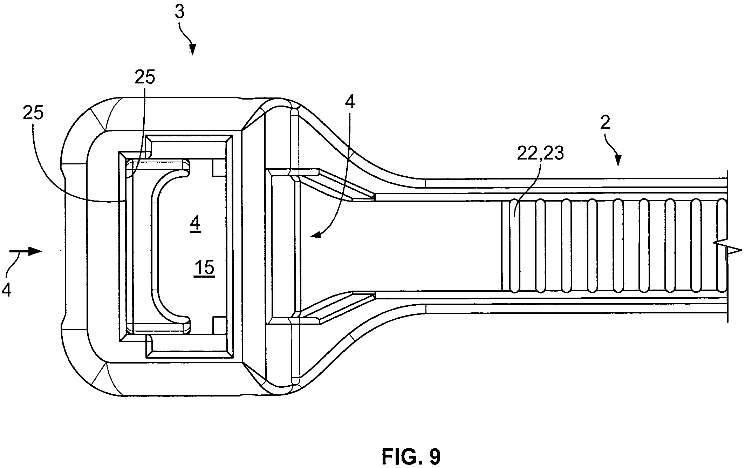

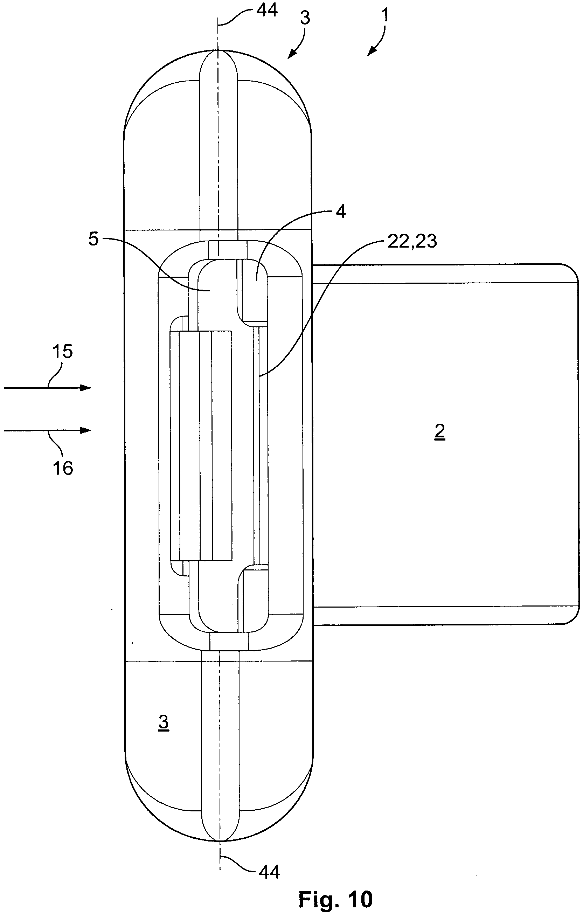

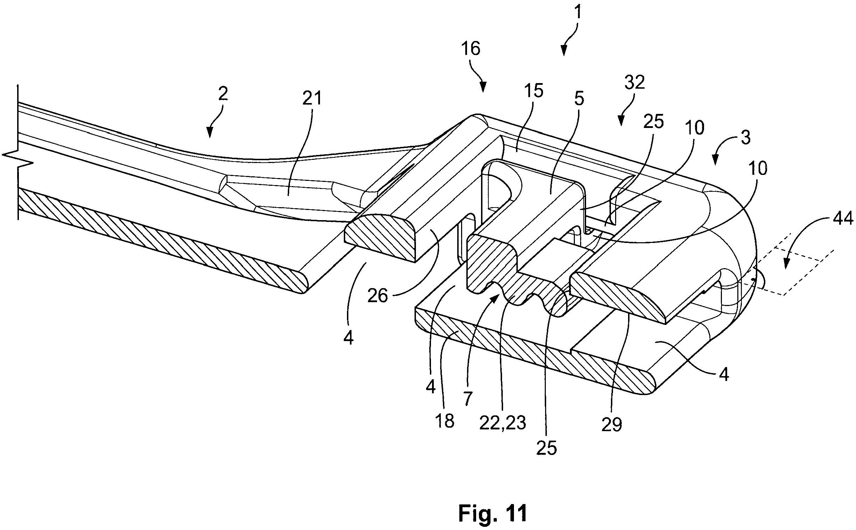

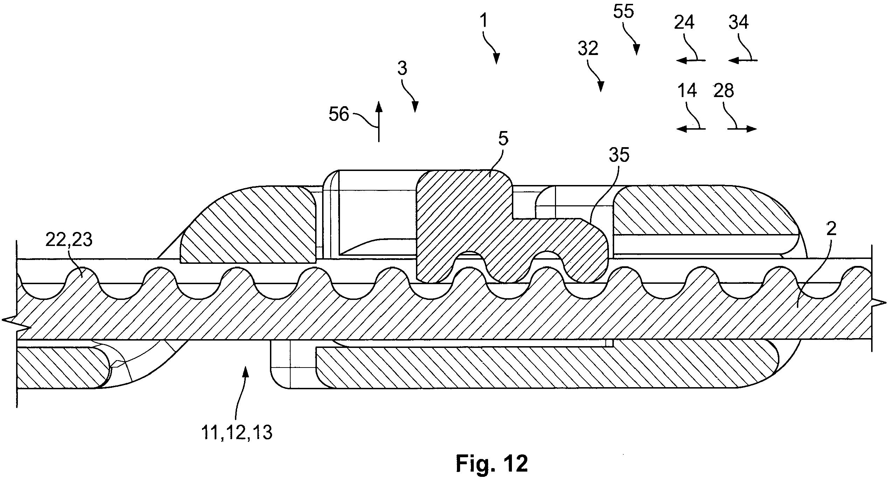

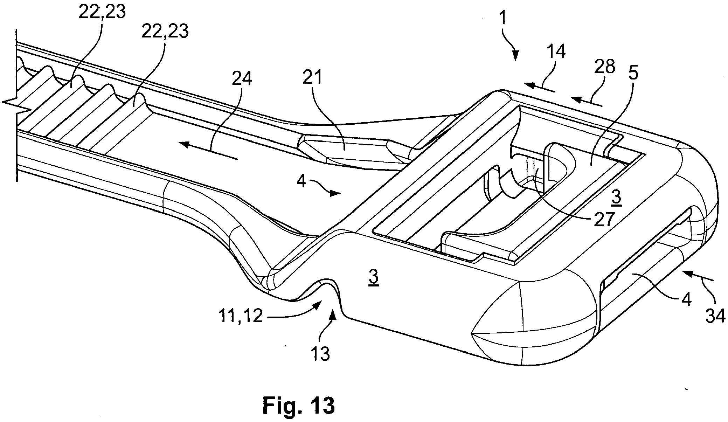

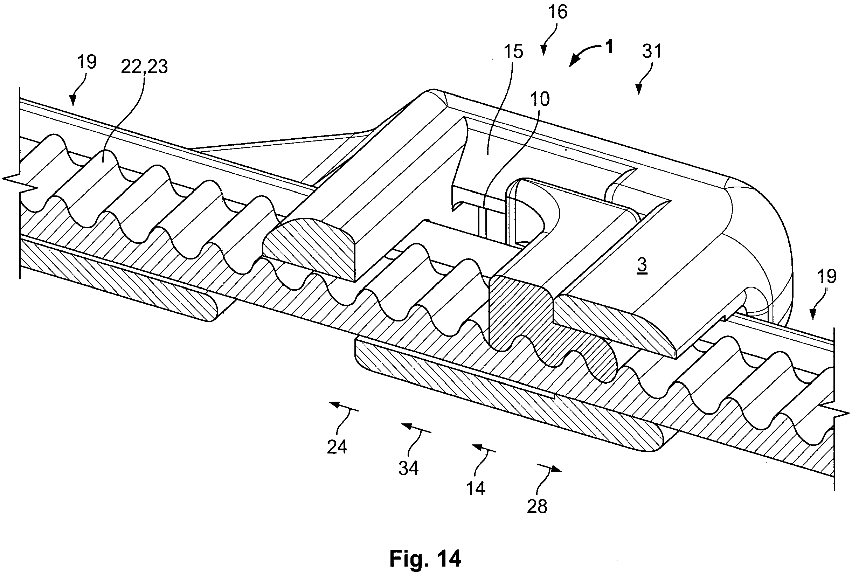

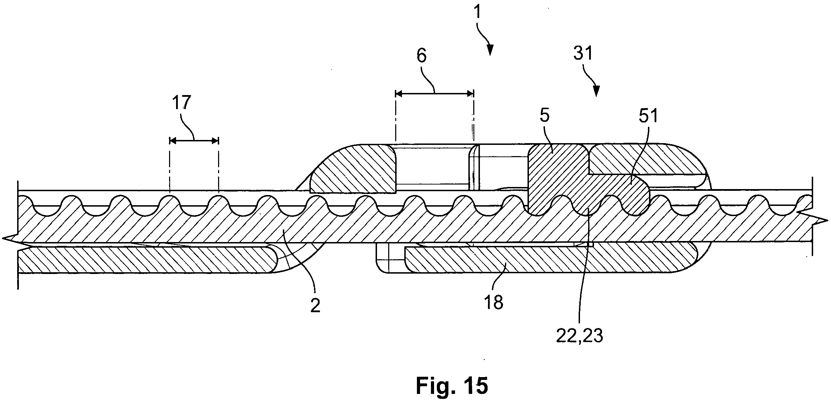

In Figures 8 to 15, a second embodiment of a cable tie 1 is depicted. The second embodiment is similar to the first embodiment but has round teeth 23 as the positive fit elements 22. The positive fit elements 22 of the blocking member 5 and the belt 2 are complementary to each other so that a gapless fit between the two is achieved.

Similar to the first embodiment, the second embodiment also has a base plate 18 that protects and supports the belt 2 opposite the side on which the blocking member 5 is located. The belt 2 is located between the blocking member 5 and the base plate 18.

The first and the second embodiment both have more than one tooth 23 for engagement. In each case, three teeth 23 are present so that the holding force is higher than in an embodiment in which only one tooth is present.

The blocking member 5 and the belt 2 comprise guiding faces 19 for guiding the belt 2 along the blocking member 5.

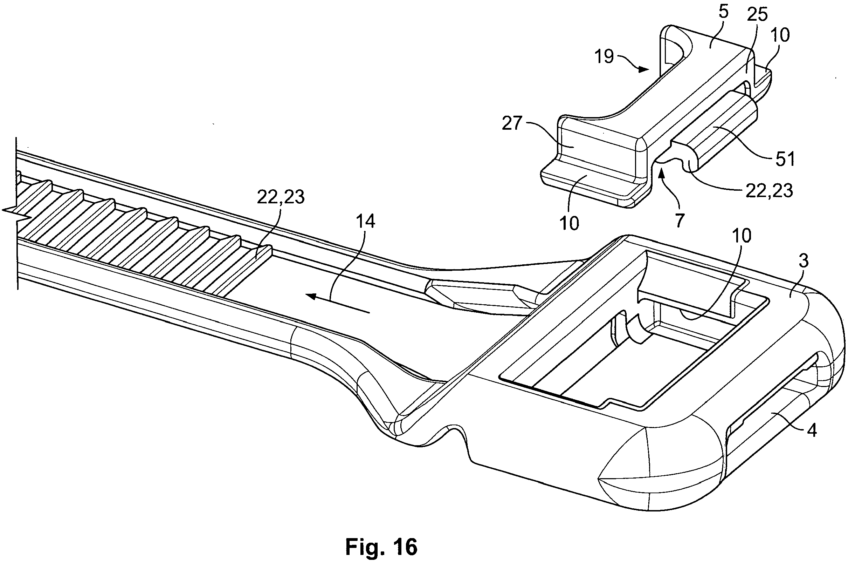

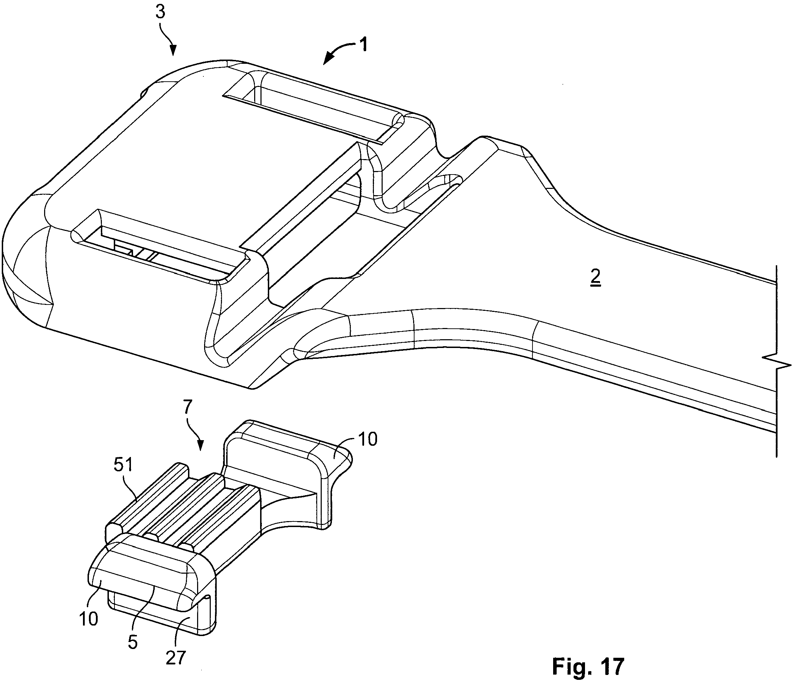

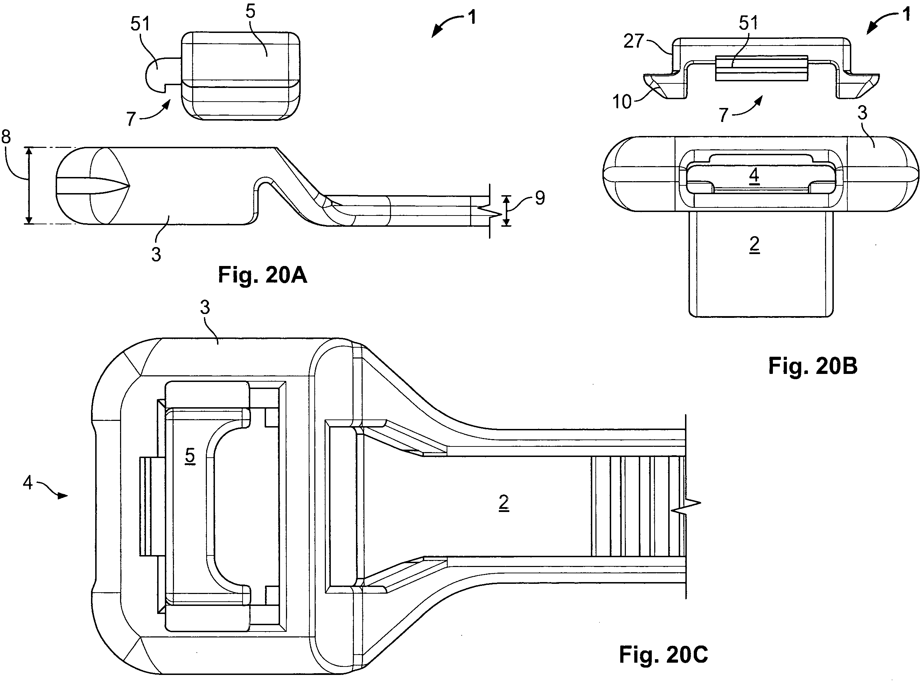

In Figures 16 to 18 and 20A, B, C, the first embodiment of a cable tie is again shown in the preassembled position in which the blocking member 5 is not yet inserted into the head 3. In particular, latches 10 with which the blocking member 5 is latched to the head 3 are visible.

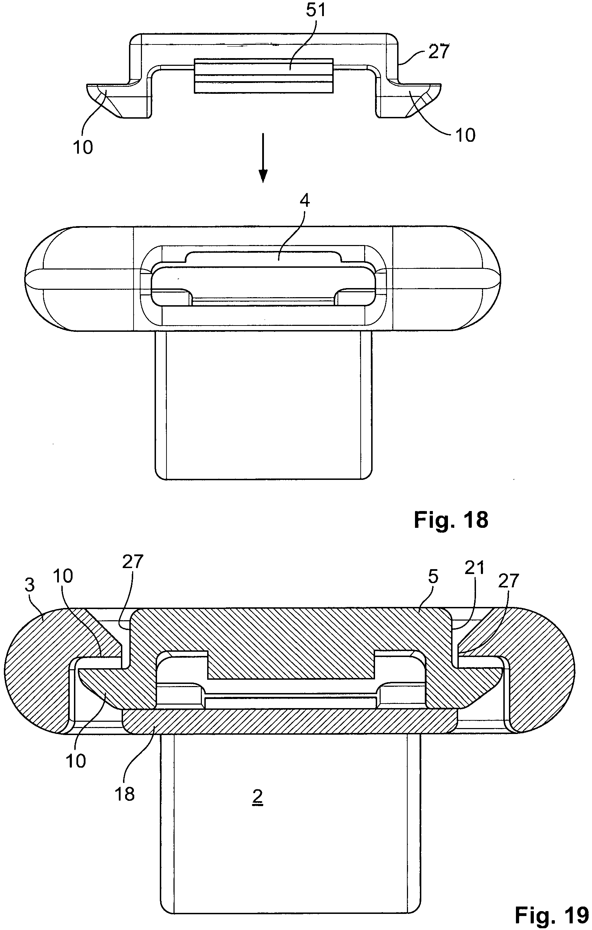

Further, guides 27 for guiding the blocking member 5 inside the head 3 can be seen. In Fig. 19 the sectional front view is shown in which the effect of the latch 10 can be seen.

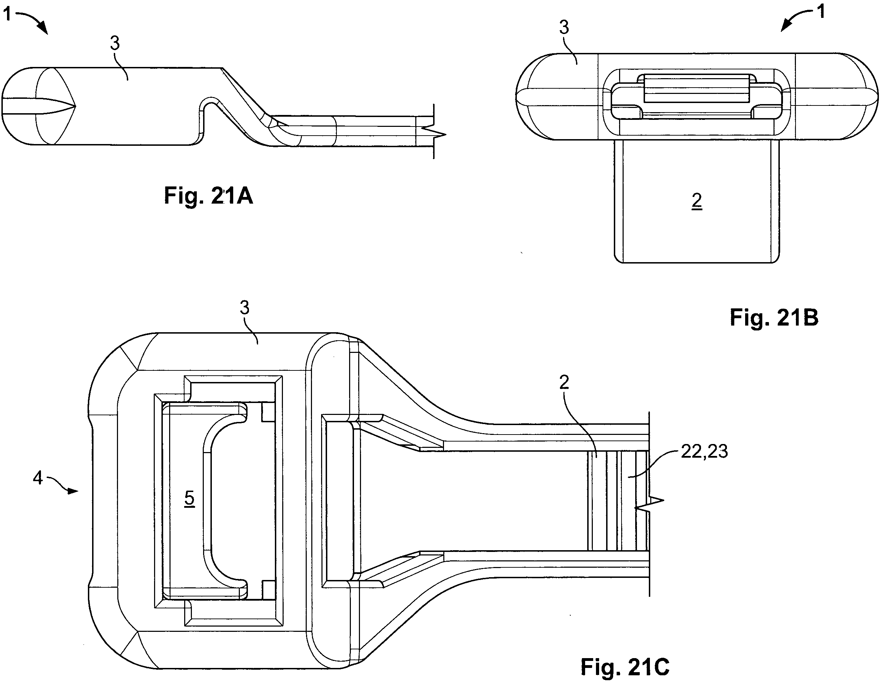

Figs. 21A, B, C show further views of the assembled first embodiment of a cable tie 1.

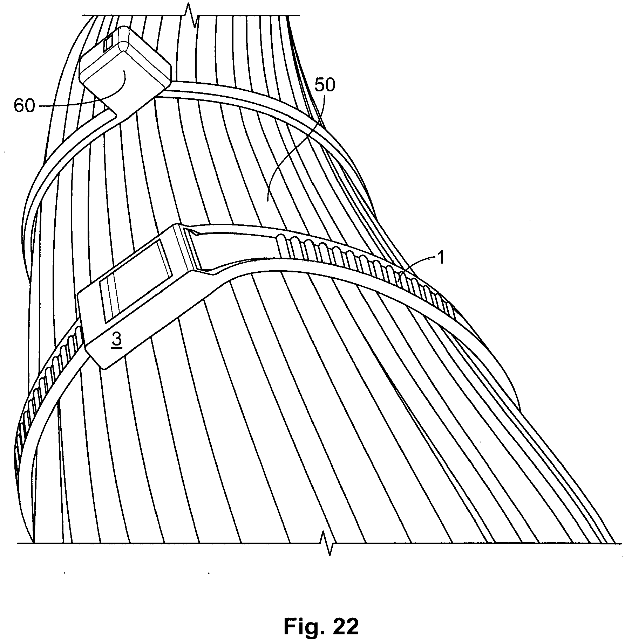

In Fig. 22, an inventive cable tie 1 can be seen in the foreground and a conventional cable tie 60 can be seen in the background, both being wrapped around a plurality of cables 50. The inventive cable tie 1 is significantly flatter then the conventional cable tie 60.

### REFERENCE NUMERALS

- 1: cable tie
- 2: belt
- 3: head
- 4: through-opening
- 5: blocking member
- 6: stroke
- 7: engagement member
- 8: thickness of the head
- 9: thickness of the belt
- 10: latch
- 11: hinge structure
- 12: weakened region
- 13: channel
- 14: tightening direction
- 15: top opening
- 16: top side
- 17: pitch
- 18: base plate
- 19: guiding face
- 21: inclined output section
- 22: positive fit element
- 23: tooth
- 24: belt direction
- 25: stop face
- 26: counter stop face
- 27: guide
- 28: direction of a locking motion
- 29: inner top face
- 31: first position
- 32: second position
- 34: belt insertion direction
- 35: face
- 40: upward direction
- 44: plane of the through-opening
- 50: cable
- 51: protrusion
- 55: force-free position
- 56: direction perpendicular to block direction
- 60: conventional cable tie

## Claims

1. Cable tie (1) comprising a belt (2), a head (3) that is connected to the belt (2) and that has a through-opening (4) for receiving the belt (2), and a blocking member (5) that is disposed in the head (3) displaceable parallel to a plane (44) of the through-opening (4) along a stroke (6) and that has at least one engagement member (7) configured to lock the belt (2).

2. Cable tie (1) according to claim 1, wherein the blocking member (5) is translationally displaceable.

3. Cable tie (1) according to one of claims 1 or 2, wherein the blocking member (5) is displaceable in a belt direction (24).

4. Cable tie (1) according to one of claims 1 to 3, wherein the head (3) and/or the blocking member (5) comprise stop faces (25), in particular stop faces (25) that are perpendicular to a belt direction (24) or a tightening direction (14), for blocking a movement relative to the other when the cable tie (1) is tightened.

5. Cable tie (1) according to one of claims 1 to 4, wherein at least one of the head (3) and the blocking member (5) comprise latches (10) for latching the blocking member (5) to the head (3).

6. Cable tie (1) according to one of claims 1 to 5, wherein the blocking member (5) and the head (3) are made from different materials.

7. Cable tie (1) according to one of claims 1 to 6, wherein the cable tie (1) comprises a hinge structure (11) with a weakened region (12).

8. Cable tie (1) according to claim 7, wherein the weakened region (12) comprises a channel (13) running perpendicular to a belt direction (24) or a tightening direction (14).

9. Cable tie (1) according to one of claims 1 to 8, wherein the head (3) comprises a top opening (15), wherein the blocking member (5) is accessible at least from a top side (16).

10. Cable tie (1) according to one of claims 1 to 9, wherein the blocking member (5) comprises a protrusion (51) protruding along a direction (28) of a locking motion, wherein the protrusion is adapted to be pulled below an inner top face (29) of the head (3) and create a positive fit between teeth (23) of the blocking member (5) and the belt (2).

11. Cable tie (1) according to one of claims 1 to 10, wherein the head (3) comprises a base plate (18) on a side opposite the blocking member (5) relative to the belt (2).

12. Cable tie (1) according to one of claims 1 to 11, wherein the blocking member (5) engages two or more teeth (23) on the belt (2).

13. Cable tie (1) according to one of claims 1 to 12, wherein the blocking member (5) and/or the belt (2) comprise guiding faces (19) running along the tightening direction (14) for guiding the belt.

14. Cable tie (1) according to one of claims 1 to 13, wherein the head (3) comprises an inclined output section (21) for the belt (2).

15. Cable tie (1) according to one of claims 1 to 14, wherein in a force free position (55) of the belt (2) and the blocking member (5), the belt (2) and the blocking member (5) overlap at least partially in a direction (56) perpendicular to the belt direction (24).
